# EUROPÄISCHE PATENTSCHRIFT

(11) **EP 3 652 012 B1**
(45) Veröffentlichungstag und Bekanntmachung des Hinweises auf die Patenterteilung: **04.08.2021**
(21) Anmeldenummer: 18742739.8
(22) Anmeldetag: 10.07.2018
(51) Int. Cl.: B60K 13/04, B60K 15/03

(54) **FLÜSSIGKEITSBEHÄLTER FÜR EIN KRAFTFAHRZEUG**
FLUID CONTAINER FOR A MOTOR VEHICLE
RÉSERVOIR DE LIQUIDE POUR UN VÉHICULE À MOTEUR

(30) Priorität: 13.07.2017 DE 102017115820
(43) Veröffentlichungstag der Anmeldung: 20.05.2020
(73) Patentinhaber: Kautex Textron GmbH & Co. KG, 53229 Bonn (DE)
(72) Erfinder: WOLF, Hartmut, 53639 Königswinter (DE)
(74) Vertreter: Richly & Ritschel Patentanwälte PartG mbB
(86) Internationale Anmeldenummer: PCT/EP2018/068704
(87) Internationale Veröffentlichungsnummer: WO 2019/011934

(56) Entgegenhaltungen:
- EP-A1- 0 847 888
- DE-A1- 19 504 217
- DE-A1-102005 000 730
- DE-B3-102015 212 524
- FR-A1- 2 663 991
- US-B1- 6 790 078

## Beschreibung

Die Erfindung betrifft einen Flüssigkeitsbehälter für ein Kraftfahrzeug, mit einem Vorratsvolumen zur Bevorratung einer Flüssigkeit, mit einem Schwalltopf, der innerhalb des Vorratsvolumens angeordnet ist, und mit einer Pumpe.

In modernen Kraftfahrzeugen werden wässrige Betriebsflüssigkeiten beispielsweise eingesetzt, um die Motorleistung zu steigern oder den Schadstoffausstoß zu verringern. So sind beispielsweise Systeme zur Wasserinjektion bekannt.

Die in einem Flüssigkeitsbehälter mitgeführten, wässrigen Betriebsflüssigkeiten können bei entsprechend niedrigen Außentemperaturen einfrieren. In einem solchen Fall ist ein schnelles Auftauen der wässrigen Betriebsflüssigkeit erforderlich, um einen Fördern zu ermöglichen und die entsprechenden Systeme mit der Flüssigkeit zu versorgen.

Hierzu ist es bekannt, in einem Vorratsvolumen einen Schwalltopf anzuordnen, der ein Nebenvolumen abgrenzt, in dem gezielt und zügig aufgetaut werden kann um eine schnelle Betriebsbereitschaft des jeweiligen Systems zu erreichen. Dem Schwalltopf ist üblicherweise ein Pumpenmodul zugeordnet, das über Leitungen mit dem Schwalltopf verbunden ist. Die Flüssigkeit wird demnach aus dem Schwalltopf gefördert und beispielsweise Injektionsdüsen zugeführt. Zum Beispiel, offenbart DE 10 2005 000 730 A1 offenbart einen zweiteiligen Kraftstoffbehälter. Hierbei ist nachteilig, dass der Schwalltopf zusammen mit dem Pumpenmodul ein Volumenverlust von bis zu 10 % des Vorratsvolumens mit sich bringt. Das Pumpenmodul muss über eine separate Heizung beheizt werden. Verbindungsleitungen zwischen der Pumpe und dem Schwalltopf bzw. der Pumpe und dem Flüssigkeitsbehälter müssen ebenfalls separat beheizt werden.

Ausgehend von dem voranstehend beschriebenen Stand der Technik liegt der Erfindung die technische Problemstellung zugrunde, einen Flüssigkeitsbehälter für ein Kraftfahrzeug anzugeben, der die voranstehend beschriebenen Nachteile nicht oder zumindest in geringerem Maße aufweist, und insbesondere eine verbesserte Ausnutzung des Vorratsvolumens und eine reduzierte Systemkomplexität mit sich bringt.

Die voranstehend beschriebene technische Problemstellung wird gelöst durch einen Flüssigkeitsbehälter nach Anspruch 1. Weitere Ausgestaltungen der Erfindung ergeben sich aus den abhängigen Ansprüchen und der nachstehenden Beschreibung.

Es wird ein Flüssigkeitsbehälter für ein Kraftfahrzeug angegeben, mit einem Vorratsvolumen zur Bevorratung einer Flüssigkeit, mit einem Schwalltopf, der innerhalb des Vorratsvolumens angeordnet ist, und mit einer Pumpe. Der Schwalltopf hat eine Einstülpung zur Aufnahme einer Pumpe und die Pumpe sitzt zumindest abschnittsweise in der Einstülpung. Durch die zumindest teilweise Integration der Pumpe in eine Umhüllende des Schwalltopfs kann das von Schwalltopf und Pumpe eingenommene Volumen innerhalb des Vorratsvolumens reduziert werden. Die Pumpe wird demnach zumindest abschnittsweise umfangsseitig von dem Schwalltopf eingefasst.

Die zumindest abschnittweise Integration der Pumpe in den Schwalltopf hat zudem den Vorteil, dass ein Wärmeeintrag im Bereich des Schwalltopfs auch zum Erwärmen der Pumpe genutzt werden kann. So kann beispielsweise eine zum Erwärmen des Schwalltopfs eingerichtete Heizeinrichtung auch die Pumpe erwärmen, so dass eine separate Heizung für die Pumpe entfallen kann. Die zumindest abschnittweise Integration der Pumpe in den Schwalltopf hat zudem den Vorteil, dass Verbindungsleitungen und die dafür ebenfalls erforderlichen Heizeinrichtungen zwischen der Pumpe und dem Schwalltopf entfallen können.

Die Einstülpung kann ein Einzug sein, der beim Tiefziehen oder Spritzgießen des Schwalltopfs hergestellt worden ist.

Die Pumpe kann von einer äußeren Oberfläche einer Wandung des Schwalltopfs zumindest abschnittsweise umfangsseitig eingefasst sein, wobei eine oder mehrere Durchgangsöffnungen in der Wandung des Schwalltopfs vorgesehen sind, um Flüssigkeit aus einem oder in ein durch den Schwalltopf gebildetes Nebenvolumen zu fördern. Die Pumpe ist daher über die Durchgangsöffnungen und ggf. zwischengeschaltete Ventile oder Leitungsabschnitte mit dem Nebenvolumen fluidverbunden. Ventile oder Leitungsabschnitte können dabei zumindest abschnittsweise, insbesondere vollständig, in eine Umhüllende des Schwalltopfs integriert sein.

Nach einer weiteren Ausgestaltung des Flüssigkeitsbehälters ist vorgesehen, dass die Pumpe vollständig in der Einstülpung sitzt. Auf diese Weise kann eine besonders kompakte Anordnung der Pumpe realisiert werden.

Die Einstülpung kann in einem Boden des Schwalltopfs vorgesehen sein. Eine derartige Anordnung ist fertigungstechnisch besonders einfach realisierbar und ermöglicht eine funktionsgerechte Orientierung der Pumpe innerhalb des Flüssigkeitsbehälters.

Nach einer weiteren Ausgestaltung des Flüssigkeitsbehälters ist ein Heizelement vorgesehen oder es sind mehrere Heizelemente vorgesehen. Wenigstens ein Heizelement ist zum Erwärmen einer die Einstülpung begrenzenden Wandung und/oder zum Erwärmen der Pumpe eingerichtet. Ein solches Heizelement beschleunigt die Einsatzbereitschaft eines mit dem Flüssigkeitsbehälter gekoppelten Systems in einem Kraftfahrzeug soweit die zu bevorratende Flüssigkeit gefroren ist oder die Viskosität der Flüssigkeit verringert werden soll.

Insbesondere kann wenigstens ein Heizelement derart angeordnet sein, dass es sowohl eine die Einstülpung begrenzende Wandung erwärmt und auch eine Erwärmung der Pumpe bewirkt. Damit kann ein zusätzliches Heizelement für die Pumpe entfallen.

Wenigstens ein Heizelement kann auf der die Einstülpung begrenzenden Wandung angeordnet sein. Beispielsweise kann ein Heizelement mit der Wandung verklebt sein. Damit lässt sich eine flexible und kostengünstige Anordnung von einem Heizelement oder mehreren Heizelementen erreichen.

Alternativ oder ergänzend kann vorgesehen sein, dass wenigstens ein Heizelement abschnittsweise oder vollständig in die die Einstülpung begrenzende Wandung integriert ist. Auf diese Weise kann eine Beschädigung des Heizelements durch Korrosion oder andere Umgebungseinflüsse vermieden werden.

Wenigstens ein Heizelement kann dazu eingerichtet sein, die die Einstülpung begrenzende Wandung beidseitig flächig zu erwärmen. Auf diese Weise kann ein Wärmeeintrag sowohl in ein durch den Schwalltopf begrenztes Nebenvolumen als auch in Richtung der Pumpe erfolgen.

Es kann vorgesehen sein, dass wenigstens ein Heizelement integraler Bestandteil der die Einstülpung begrenzenden Wandung ist, wobei das Heizelement ein Polymer aufweist, das einen positiven Temperaturkoeffizienten hat, und wobei Elektroden mit dem Polymer verbunden sind, die zum Übertragen eines elektrischen Stroms zum Erwärmen des Polymers eingerichtet sind, insbesondere, dass das Heizelement vollständig von einem Kunststoff der Wandung eingefasst ist.

Das Heizelement kann ein PTC-Heizelement sein. Die Verwendung eines PTC-Heizelements hat den Vorteil, dass aufgrund des Temperaturverhaltens des Polymers auf eine Steuerung zum Vermeiden von Überhitzen verzichtet werden kann. So kann auch bei geringem Füllstand des Schwalltopfs eine Beschädigung der Heizeinrichtung durch Überhitzen vermieden werden, da durch den mit steigender Temperatur stark ansteigenden Widerstand des Polymers eine Selbstabschaltung der PTC-Heizeinrichtung erfolgt.

Das Heizelement kann aus einem Polymer bestehen, wobei das Polymer einen positiven Temperaturkoeffizienten hat. Das Polymer des Heizelements ist insbesondere mithilfe der Elektroden erwärmbar, wobei die Elektroden zum Einleiten einer Heizleistung mit einer elektrischen Energiequelle koppelbar oder gekoppelt sind, insbesondere mit einer Spannungsquelle.

Bei dem Polymer kann es sich um ein bei Raumtemperatur festes oder pastöses Material handeln.

Das Polymer kann ein thermoplastisches Material sein.

Das Polymer kann ein Polyethylen (PE) sein.

Das Polymer kann Additive enthalten, die eine elektrische Leitfähigkeit des Polymers bewirken oder erhöhen. Beispielsweise kann das Polymer Ruß als Additiv aufweisen. Bei dem Additiv kann es sich um ein nichtmetallisches Additiv handeln. Die Elektroden können eine im Wesentlichen linienförmige Gestalt haben, d.h. schmal und länglich ausgebildet sein, oder plattenförmig ausgestaltet sein. Insbesondere die plattenförmige Gestalt bietet den Vorteil, dass eine flächige Einbringung einer Heizleistung erfolgen kann.

Die Elektroden können zum Einleiten eines Stromflusses quer zu einer Wandungsfläche des Schwalltopfs eingerichtet sind. Insbesondere können Elektroden vorgesehen sein, die zum Einleiten eines Stromflusses senkrecht zu einer Wandungsfläche des Schwalltopfs eingerichtet sind.

Alternativ können die Elektroden zum Einleiten eines Stromflusses entlang einer Wandungsfläche des Schwalltopfs eingerichtet sein. Insbesondere können Elektroden vorgesehen sein, die zum Einleiten eines Stromflusses parallel zu einer Wandungsfläche des Schwalltopfs eingerichtet sind.

Einem Heizelement zugeordnete Elektroden können linienförmig sein.

Einem Heizelement zugeordnete Elektroden können plattenförmig sein.

Beispielsweise können einem ersten Heizelement linienförmige Elektroden oder plattenförmige Elektroden zugeordnet sein. Einem zusätzlichen, zweiten Heizelement können linienförmige Elektroden oder plattenförmige Elektroden zugeordnet sein. Das erste Heizelement kann in einer Seitenwand des Schwalltopfs angeordnet sein. Das zweite Heizelement kann in einem Boden des Schwalltopfs angeordnet sein.

Um die Elektroden vor einer Beschädigung zu schützen, können die Elektroden zumindest teilweise von einem Kunststoff einer Wandung des Schwalltopfs bedeckt sein.

Das Heizelement kann eines oder mehrere Keramik-PTC-Elemente, sogenannte "PTC-Steine" aufweisen, die ganz oder teilweise in eine Wandung des Schwalltopfs eingebettet sein können. Diese PTC-Steine können auf einem oder mehreren metallischen Wärmeleitkörpern sitzen, z.B. aus Aluminium, um die im Heizbetrieb lokal sehr hohe Wärmedichte der PTC-Steine flächig zu verteilen. Die metallischen Wärmeleitkörper können ebenfalls ganz oder teilweise in die Wandung des Schwalltopfs eingebettet sein.

Um eine möglichst gute Wärmeübertragung zwischen der Pumpe und dem Schwalltopf zu erreichen, ist zwischen der Pumpe und dem Schwalltopf eine wärmeleitfähige Vergussmasse vorgesehen, wobei die Vergussmasse die Pumpe und den Schwalltopf im Bereich der Einstülpung zumindest abschnittsweise spaltfrei verbindet.

Bei der Vergussmasse kann es sich beispielsweise um ein Silikonelastomer handeln, das eine Härte von 30-60 Shore(A) hat und eine Wärmeleitfähigkeit von 1,5-3 W/(m*K).

Die Pumpe kann mit einer Dosierleitung verbunden sein, wobei die Dosierleitung im Bereich der Einstülpung zumindest abschnittsweise zwischen der Pumpe und dem Schwalltopf verläuft. Auf diese Weise können der Pumpe und oder dem Schwalltopf zugeordnete Heizelemente auch zum Erwärmen der Dosierleitung eingerichtet sein.

Es kann insbesondere vorgesehen sein, dass eine zwischen der Pumpe und dem Schwalltopf verlaufende Dosierleitung von einer den Schwalltopf und die Pumpe verbindenden Vergussmasse eingefasst ist.

Um in einfacher Weise ein Fördern von Flüssigkeit aus dem Vorratsvolumen in den Schwalltopf zu erreichen, kann eine Strahlpumpe vorgesehen sein. Die Pumpe ist zum Erzeugen eines Treibstrahls mit der Strahlpumpe gekoppelt.

An einem Pumpenauslass der Pumpe kann ein Ventil angeordnet sein, das zum Verhindern eines Flüssigkeitseintritts bei Stillstand der Pumpe eingerichtet ist. Insbesondere kann das Ventil dazu eingerichtet sein, ein Eindringen von Flüssigkeit aus einem durch den Schwalltopf definierten Nebenvolumen beim Stillstand der Pumpe in die Pumpe zu vermeiden.

Wenn vorliegend von einem Nebenvolumen gesprochen wird, so handelt es sich dabei um ein durch eine Innenseite einer Wandung des Schwalltopfs begrenztes Volumen, dass einer der Pumpe zugeordneten Außenseite der Wandung abgewandt ist.

Soweit der Schwalltopf unterhalb eines maximalen Füllstandes der Flüssigkeit in dem Vorratsvolumen angeordnet ist, besteht die Möglichkeit, dass beim Gefrieren der Flüssigkeit der Schwalltopf vollständig von einer Eismasse eingefasst ist bzw. von einer Eisfläche überspannt wird. In einem solchen Fall besteht die Gefahr, dass durch ein Einschalten der Pumpe und eine Entnahme von Flüssigkeit aus dem Tank unterhalb der Eisfläche ein Unterdruck erzeugt wird bzw. innerhalb eines geschlossenen Eisblocks eine Kavität gebildet wird. Nach einer gewissen Anlaufzeit ist ein Fördern von Flüssigkeit nicht mehr möglich, da keine Belüftung des Ansaugbereichs der Pumpe stattfinden kann.

Um eine zuverlässige Belüftung zu erreichen, kann ein Pumpenzulauf der Pumpe eine Rohrleitung haben, die ausgehend von einem Ansaugabschnitt zumindest abschnittsweise oberhalb einer maximalen Füllhöhe des Vorratsvolumens verläuft. Soweit erwärmte Flüssigkeit durch diese Rohrleitung strömt, wird umfangsseitig an die Rohrleitung angrenzendes Eis, aufgeschmolzen sodass eine Belüftung des Ansaugbereichs erreicht werden kann.

Es kann eine Ansaugöffnung zum Fördern von Flüssigkeit aus dem Vorratsvolumen in das Nebenvolumen des Schwalltopfs vorgesehen sein, der ein Pilzkopfventil zugeordnet ist. Das Pilzkopfventil erlaubt eine Erstbefüllung des Schwalltopfs bei Erstbefüllung des Flüssigkeitsbehälters. Zudem bewirkt das Pilzkopfventil, dass der Schwalltopf leerlaufsicher ist, insbesondere in Fällen, in denen der Pumpe keine Energie zugeführt wird und die Pumpe stillsteht.

Eine Ansaugöffnung zum Fördern von Flüssigkeit aus dem Vorratsvolumen in das Nebenvolumen des Schwalltopfs kann zu dem Schwalltopf beabstandet sein. Alternativ kann eine solche Ansaugöffnung in eine Seitenwandung oder einen Boden des Schwalltops integriert sein. In diesem Fall können eine Ansaugleitung und eine ggf. erforderliche Heizeinrichtung zum Erwärmen einer solchen Ansaugleitung entfallen.

Ein Pumpenzulauf der Pumpe kann einen Filter haben, der in einem fallenden Rohrabschnitt des Pumpenzulaufs angeordnet ist. Auf diese Weise kann erreicht werden, dass der Filter durch ein Leerfahren der Pumpe trockengelegt werden kann. Es kann damit vermieden werden, dass sich Flüssigkeit in dem Filter ansammelt, die beispielsweise vor einem Start eines Wasserinjektionssystems gegebenenfalls aufgetaut werden muss und den Systemstart damit verzögert.

Nachstehend wird die Erfindung anhand einer Ausführungsbeispiele darstellenden Zeichnung näher beschrieben: es zeigen jeweils schematisch:
- Fig. 1A: einen erfindungsgemäßen Flüssigkeitsbehälter;
- Fig. 1B: eine Ausgestaltung eines Heizelements;
- Fig. 1C: eine weitere Ausgestaltung eines Heizelements;
- Fig. 2: einen vergrößerten Ausschnitt der Fig. 1;
- Fig. 3: eine Variante des Flüssigkeitsbehälters.

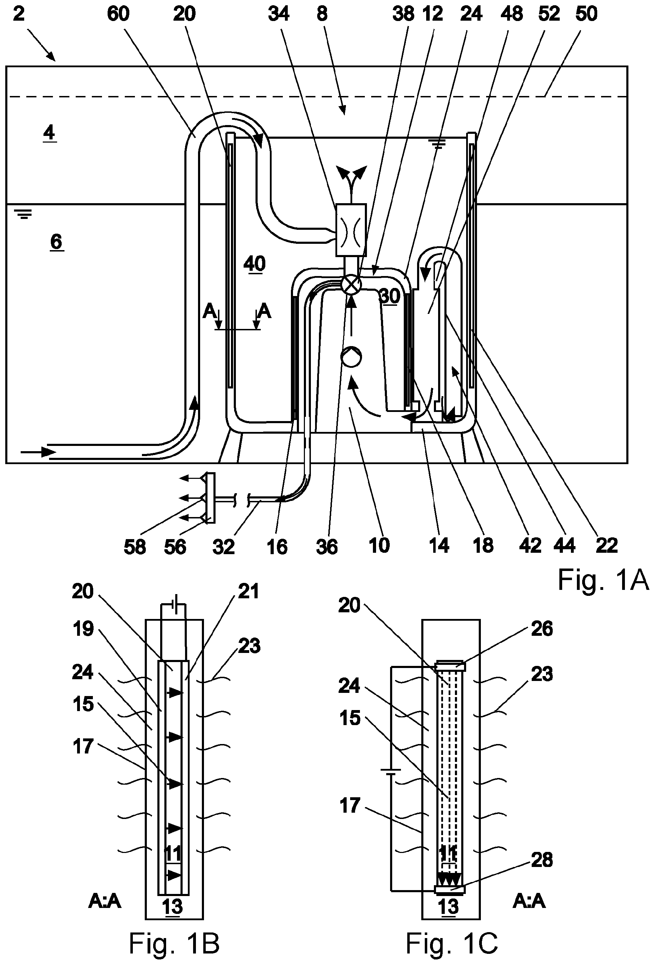

Fig. 1A zeigt einen Flüssigkeitsbehälter 2 für ein Kraftfahrzeug. Der Flüssigkeitsbehälter 2 hat ein Vorratsvolumen 4 zur Bevorratung einer Flüssigkeit 6.

Innerhalb des Vorratsvolumens 4 ist ein Schwalltopf 8 angeordnet.

Innerhalb des Vorratsvolumens 4 ist eine Pumpe 10 angeordnet.

Der Schwalltopf 8 hat eine Einstülpung 12 zur Aufnahme der Pumpe 10. Die Pumpe 10 sitzt vorliegend vollständig in der Einstülpung 12. Die Einstülpung 12 ist hier als Einzug in einem Spritzgussverfahren hergestellt worden.

Die Einstülpung 12 ist in einem Boden 14 des Schwalltopfs 8 vorgesehen. Es sind Heizelemente 16, 18, 20, 22 vorgesehen.

Die Heizelemente 16 und 18 sind zum Erwärmen einer die Einstülpung 12 begrenzenden Wandung 24 und zum Erwärmen der Pumpe 10 eingerichtet. Die Heizelemente 16, 18 sind integraler Bestandteil der die Einstülpung 12 begrenzenden Wandung 24 des Schwalltopfs 8. Die Heizelemente 20, 22 sind in analoger Weise vollständig von der Wandung 24 des Schwalltopfs 8 eingefasst. Das Heizelement 20 ist vollständig von einem Kunststoff 13 der Wandung 24 eingefasst. Das Heizelement 20 weist demnach keinen unmittelbaren Kontakt zu der Flüssigkeit 6 auf.

Das Heizelement 20 ist vorliegend eine PTC-Heizelement 20. Das Heizelement 20 besteht vorliegend aus einem Polymer 11, wobei das Polymer 11 einen positiven Temperaturkoeffizienten hat. Das bedeutet, dass der elektrische Widerstand des Polymers 11 mit steigender Temperatur zunimmt.

Es sind Elektroden 19, 21, 26, 28 vorgesehen, die mit dem Polymer 11 verbunden sind. Das Polymer 11 ist vorliegend bei Raumtemperatur fest. Gemäß alternativen Ausgestaltungen kann jedoch vorgesehen sein, dass es sich bei dem Polymer um ein bei Raumtemperatur pastöses Material handelt, dass in die Wandung 24 eingebettet ist.

Das Polymer 11 ist vorliegend mit Additiven versetzt, um die elektrische Leitfähigkeit des Polymers zu bewirken oder zu erhöhen. Gemäß Fig. 1C sind die Elektroden 26, 28 zum Einleiten eines Stromflusses 15 entlang einer Wandungsfläche 17 des Schwalltopfs 8 eingerichtet. Gemäß Fig. 1C ist der Stromfluss 15 insbesondere parallel zu der Wandungsfläche 17 des Schwalltopfs 8 orientiert.

Gemäß Fig. 1B sind die Elektroden 19, 21 zum Einleiten des Stromflusses 15 quer zu der Wandungsfläche 17 des Schwalltopfs 8 eingerichtet. Gemäß Fig. 1B ist der Stromfluss 15 insbesondere senkrecht zur Wandungsfläche 17 des Schwalltopfs 8 orientiert.

Wie Fig. 1B zu entnehmen ist, sind die Elektroden 19, 21 gemäß Fig. 1C plattenförmige Elektroden 19, 21 und stellen eine flächige Verteilung von Wärme 23 sicher.

Gemäß der Alternative nach Fig. 1C sind im Wesentlichen linienförmige Elektroden 26, 28 vorgesehen.

Zwischen der Pumpe und dem Schwalltopf 8 ist eine wärmeleitfähige Vergussmasse 30 vorgesehen. Die Vergussmasse 30 verbindet die Pumpe 10 und den Schwalltopf 8 im Bereich der Einstülpung 12 spaltfrei.

Die Pumpe 10 ist mit einer Dosierleitung 32 verbunden. Die Dosierleitung 32 ist im Bereich der Einstülpung 12 zwischen der Pumpe 10 und dem Schwalltopf 8 erstreckt. Dabei ist die Dosierleitung 32 in die Vergussmasse 30 eingebettet bzw. von der Vergussmasse 30 umschlossen.

Es ist eine Strahlpumpe 34 zum Fördern von Flüssigkeit 6 aus dem Vorratsvolumen 4 in den Schwalltopf 8 vorgesehen. Die Pumpe 10 ist zum Erzeugen eines Treibstrahls mit der Strahlpumpe 34 gekoppelt.

An einem Pumpenauslass 36 der Pumpe 10 ist ein Ventil 38 angeordnet. Das Ventil 38 ist zum Verhindern eines Flüssigkeitseintritts bei Stillstand der Pumpe 10 eingerichtet. Das Ventil 38 verhindert ein Volllaufen der Pumpe nach dem Leerfahren der Pumpe. Es wird verhindert, dass Flüssigkeit 6 aus einem durch den Schwalltopf 8 begrenzten Nebenvolumen 40 in die Pumpe 10 eindringen kann.

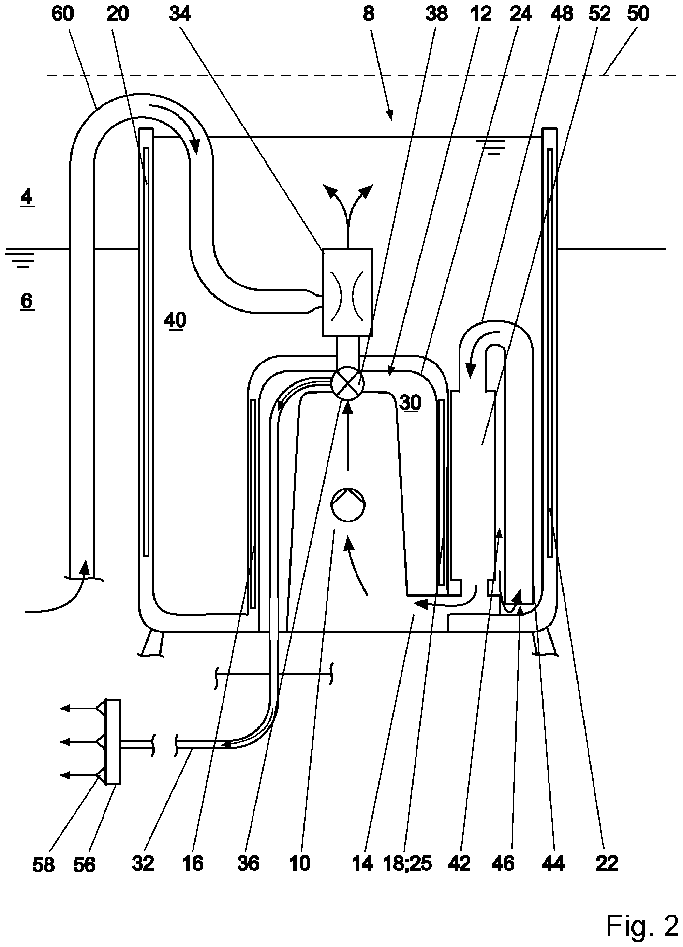

Ein Pumpenzulauf 42 der Pumpe 10 hat eine Rohrleitung 44. Die Rohrleitung 44 ist ausgehend von einem Ansaugabschnitt 46 mit einem Knie 48 unterhalb einer maximalen Füllhöhe 50 des Vorratsvolumens 4 angeordnet (Fig. 1, Fig. 2).

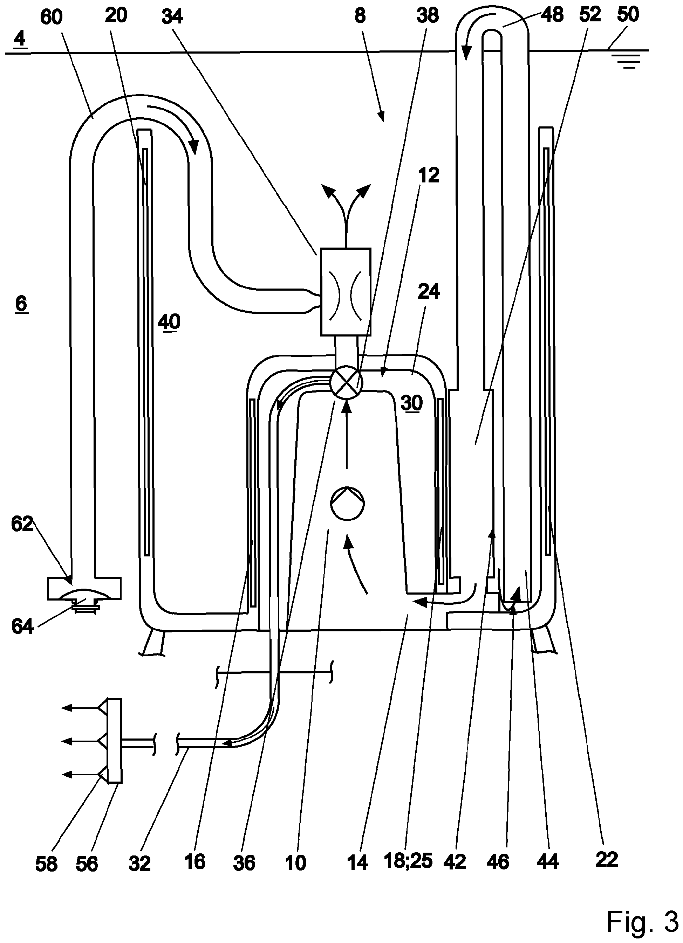

Gemäß einer Variante ist das Knie 48 oberhalb einer maximalen Füllhöhe 50 des Vorratsvolumens 4 angeordnet (vergleiche Fig. 3) .

In einem Pump- und Heizbetrieb wird der Schwalltopf 8 zunächst mithilfe der Heizelemente 16, 18, 20, 22 erwärmt. Flüssigkeit 6 wird von dem Ansaugabschnitt 46 der Pumpe 10 in die Dosierleitung 32 und hin zu der Strahlpumpe 34 gefördert

Über die Dosierleitung 32 gelangt Flüssigkeit 6 zu einer Verteileinrichtung 56 mit Düsen 58.

Im Bereich der Strahlpumpe 34 bewirkt die Pumpe 10 im Heiz- und Pumpbetrieb einen Treibstahl, der zum Ansaugen von Flüssigkeit 6 aus dem Vorratsvolumen 4 über eine beheizbare Rohrleitung 60 führt. Die Rohrleitung 60 wird nahe der Heizeinrichtung 20 geführt, so dass die Rohrleitung ebenfalls mithilfe der Heizeinrichtung 20 erwärmbar ist. Auf diese Weise wird ein Umwälzen von Flüssigkeit 6 bewirkt und gegebenenfalls vereiste Flüssigkeit 6 kann aufgetaut werden.

Einer Ansaugöffnung 62 der Rohrleitung 60 kann ein Pilzkopfventil 64 zugeordnet sein.

In einem Spülbetrieb wird die Pumpe 10 in umgekehrter Richtung betrieben und leer gefahren, sodass im Bereich der Düsen 58 Luft angesaugt wird. Die Pumpe 10 wird auf diese Weise vollständig von Flüssigkeit 6 entleert, so dass innerhalb der Pumpe 10 und auch innerhalb des Filters 52 keine Flüssigkeit mehr vorhanden ist.

### Bezugszeichen

- 2: Flüssigkeitsbehälter
- 4: Vorratsvolumen
- 8: Schwalltopf
- 10: Pumpe
- 11: Polymer
- 12: Einstülpung
- 13: Kunststoff
- 14: Boden
- 15: Stromfluss
- 16: Heizelement
- 17: Wandungsfläche
- 18: Heizelement
- 19: plattenförmige Elektrode
- 20: Heizelement
- 21: plattenförmige Elektrode
- 22: Heizelement
- 23: Wärme
- 24: Wandung der Einstülpung 12
- 26: Elektrode
- 28: Elektrode
- 30: Vergussmasse
- 32: Dosierleitung
- 34: Strahlpumpe
- 36: Pumpenauslass
- 38: Ventil
- 40: Nebenvolumen
- 42: Zulauf
- 44: Rohrleitung
- 46: Ansaugbereich / Ansaugabschnitt
- 48: Knie
- 50: maximale Füllhöhe
- 52: Filter
- 56: Verteileinrichtung
- 58: Düse
- 60: Rohrleitung
- 62: Ansaugöffnung
- 64: Pilzkopfventil

## Patentansprüche

1. Flüssigkeitsbehälter für ein Kraftfahrzeug,
- mit einem Vorratsvolumen (4) zur Bevorratung einer Flüssigkeit (6),
- mit einem Schwalltopf (8), der innerhalb des Vorratsvolumens (4) angeordnet ist, und
- mit einer Pumpe (10),
- wobei der Schwalltopf (8) eine Einstülpung (12) zur Aufnahme der Pumpe (10) hat und
- die Pumpe (10) zumindest abschnittsweise in der Einstülpung (12) sitzt,
**dadurch gekennzeichnet, dass**
- zwischen der Pumpe (10) und dem Schwalltopf (8) eine wärmeleitfähige Vergussmasse (30) vorgesehen ist,
- wobei die Vergussmasse (30) die Pumpe (10) und den Schwalltopf (8) im Bereich der Einstülpung (12) zumindest abschnittsweise spaltfrei verbindet.

2. Flüssigkeitsbehälter nach Anspruch 1,
**dadurch gekennzeichnet, dass**
- die Pumpe (10) vollständig in der Einstülpung (12) sitzt.

3. Flüssigkeitsbehälter nach einem der Ansprüche 1 oder 2,
**dadurch gekennzeichnet, dass**
- die Einstülpung (12) in einem Boden (14) des Schwalltopfs (8) vorgesehen ist.

4. Flüssigkeitsbehälter nach einem der voranstehenden Ansprüche,
**dadurch gekennzeichnet, dass**
- ein Heizelement (16, 18, 20, 22) vorgesehen ist oder mehrere Heizelemente (16, 18, 20, 22) vorgesehen sind,
- wobei wenigstens ein Heizelement (16, 18, 20, 22) zum Erwärmen einer die Einstülpung (12) begrenzenden Wandung (24) und/oder zum Erwärmen der Pumpe (10) eingerichtet ist.

5. Flüssigkeitsbehälter nach Anspruch 4,
**dadurch gekennzeichnet, dass**
- wenigstes ein Heizelement (16, 18, 20, 22) auf der die Einstülpung (12) begrenzenden Wandung (24) angeordnet ist und/oder
- wenigstens ein Heizelement (16, 18, 20, 22) abschnittweise oder vollständig in die die Einstülpung (12) begrenzende Wandung (24) integriert ist
und/oder
- wenigstens ein Heizelement (16, 18, 20, 22) dazu eingerichtet ist, die die Einstülpung (12) begrenzende Wandung (24) beidseitig flächig zu Erwärmen.

6. Flüssigkeitsbehälter nach einem der Ansprüche 4 oder 5,
**dadurch gekennzeichnet, dass**
- wenigstens ein Heizelement (16, 18, 20, 22) integraler Bestandteil der die Einstülpung (12) begrenzenden Wandung (24) ist,
- wobei das Heizelement (16, 18, 20, 22) ein Polymer (11) aufweist, das einen positiven Temperaturkoeffizienten hat, und
- wobei Elektroden (19, 21, 26, 28) mit dem Polymer (11) verbunden sind, die zum Übertragen eines elektrischen Stroms zum Erwärmen des Polymers (11) eingerichtet sind
- insbesondere, dass das Heizelement (16, 18, 20, 22) vollständig von einem Kunststoff (13) der Wandung (24) eingefasst ist.

7. Flüssigkeitsbehälter nach einem der voranstehenden Ansprüche,
**dadurch gekennzeichnet, dass**
- die Pumpe (10) mit einer Dosierleitung (32) verbunden ist,
- wobei die Dosierleitung (32) im Bereich der Einstülpung (12) zumindest abschnittsweise zwischen der Pumpe (10) und dem Schwalltopf (8) verläuft.

8. Flüssigkeitsbehälter nach einem der voranstehenden Ansprüche,
**dadurch gekennzeichnet, dass**
- eine Strahlpumpe (34) zum Fördern von Flüssigkeit (6) aus dem Vorratsvolumen (4) in den Schwalltopf (8) vorgesehen ist,
- wobei die Pumpe (10) zum Erzeugen eines Treibstrahls mit der Strahlpumpe (34) gekoppelt ist.

9. Flüssigkeitsbehälter nach einem der voranstehenden Ansprüche,
**dadurch gekennzeichnet, dass**
- wenigstens ein Ventil (38) an einem Pumpenauslass (36) der Pumpe (10) angeordnet ist, dass zum Verhindern eines Flüssigkeitseintritts bei Stillstand der Pumpe (10) eingerichtet ist.

10. Flüssigkeitsbehälter nach einem der voranstehenden Ansprüche,
**dadurch gekennzeichnet, dass**
- ein Pumpenzulauf (42) der Pumpe (10) eine Rohrleitung (44) hat, die ausgehend von einem Ansaugabschnitt (46) zumindest abschnittsweise oberhalb einer maximalen Füllhöhe (50) des Vorratsvolumens (4) verläuft.
und/oder
- ein Pumpenzulauf (42) der Pumpe einen Filter (52) hat, der in einem fallenden Rohrabschnitt des Pumpenzulaufs (42) abgeordnet ist.

## Claims

1. Liquid container for a motor vehicle,
- with a storage volume (4) for storing a liquid (6),
- comprising a surge tank (8) arranged within the storage volume (4), and
- with a pump (10),
- wherein the surge tank (8) has a recess (12) for receiving the pump (10), and
- the pump (10) is seated at least in sections in the recess (12),
**characterized in that**
- a thermally conductive casting compound (30) is provided between the pump (10) and the surge tank (8),
- wherein the casting compound (30) connects the pump (10) and the surge tank (8) in the region of the recess (12) at least in sections without a gap.

2. A liquid container according to claim 1,
**characterized in that**
- the pump (10) is completely seated in the recess (12).

3. A liquid container according to any one of claims 1 or 2, **characterized in that**
- the recess (12) is provided in a bottom (14) of the surge tank (8).

4. A liquid container according to any one of claims 1 or 2, **characterized in that**
- one heating element (16, 18, 20, 22) is provided or several heating elements (16, 18, 20, 22) are provided,
- wherein at least one heating element (16, 18, 20, 22) is arranged for heating a wall (24) bounding the recess (12) and/or for heating the pump (10).

5. A liquid container according to claim 4,
**characterized in that**
- at least one heating element (16, 18, 20, 22) is arranged on the wall (24) bounding the recess (12)
and/or
- at least one heating element (16, 18, 20, 22) is integrated in sections or completely in the wall (24) bounding the recess (12)
and/or
- at least one heating element (16, 18, 20, 22) is set up to heat the wall (24) bounding the recess (12) over its entire surface on both sides.

6. A liquid container according to any one of claims 4 or 5, **characterized in that**
- at least one heating element (16, 18, 20, 22) is an integral part of the wall (24) bounding the recess (12),
- wherein the heating element (16, 18, 20, 22) comprises a polymer (11) having a positive temperature coefficient, and
- wherein electrodes (19, 21, 26, 28) are connected to the polymer (11) and are adapted to transmit an electric current for heating the polymer (11)
- in particular, that the heating element (16, 18, 20, 22) is completely enclosed by a plastic (13) of the wall (24).

7. A liquid container according to any one of the preceding claims,
**characterized in that**
- the pump (10) is connected to a metering line (32),
- wherein the metering line (32) is located at least in sections between the pump (10) and the surge tank (8) in the region of the recess (12).

8. A liquid container according to any one of the preceding claims,
**characterized in that**
- a jet pump (34) is provided for delivering liquid (6) from the supply volume (4) into the surge tank (8),
- wherein the pump (10) is coupled to the jet pump (34) to generate a propellant jet.

9. A liquid container according to any one of the preceding claims,
**characterized in that**
- at least one valve (38) is arranged at a pump outlet (36) of the pump (10), which is arranged to prevent liquid from entering when the pump (10) is stopped.

10. A liquid container according to any one of the preceding claims,
**characterized in that**
- a pump inlet (42) of the pump (10) has a pipeline (44) which, starting from an intake section (46), is located at least in sections above a maximum filling level (50) of the storage volume (4).
and/or
- a pump inlet (42) of the pump has a filter (52) disposed in a falling pipe section of the pump inlet (42).

## Revendications

1. Réservoir à liquide pour véhicule automobile, comprenant
- un volume de stockage (4) pour stocker un liquide (6),
- une cuve de compensation (8) disposée à l'intérieur du volume de stockage (4) et
- une pompe (10),
- la cuve de compensation (8) ayant un renfoncement (12) pour recevoir la pompe (10) et
- la pompe (10) étant logée au moins partiellement dans le renfoncement (12),
**caractérisé en ce**
- **qu'**une masse de scellement (30) thermoconductrice est prévue entre la pompe (10) et la cuve de compensation (8),
- la masse de scellement (30) reliant la pompe (10) et la cuve de compensation (8) dans la zone du renfoncement (12) au moins partiellement sans aucun espace.

2. Réservoir à liquide selon la revendication 1, **caractérisé en ce que**
- la pompe (10) est entièrement logée dans le renfoncement (12).

3. Réservoir à liquide selon l'une des revendications 1 ou 2, **caractérisé en ce que**
- le renfoncement (12) est prévu dans une base (14) de la cuve de compensation (8).

4. Réservoir à liquide selon l'une des revendications précédentes, **caractérisé en ce**
- **qu'**un élément chauffant (16, 18, 20, 22) est prévu ou plusieurs éléments chauffants (16, 18, 20, 22) sont prévus,
- au moins un élément chauffant (16, 18, 20, 22) étant conçu pour chauffer une paroi (24) délimitant le renfoncement (12) et/ou pour chauffer la pompe (10).

5. Réservoir à liquide selon la revendication 4, **caractérisé en ce**
- **qu'**au moins un élément chauffant (16, 18, 20, 22) est disposé sur la paroi (24) délimitant le renfoncement (12) et/ou
- au moins un élément chauffant (16, 18, 20, 22) est partiellement ou totalement intégré dans la paroi (24) délimitant le renfoncement (12) et/ou
- au moins un élément chauffant (16, 18, 20, 22) est conçu pour chauffer la paroi (24) délimitant le renfoncement (12) sur une grande surface des deux côtés.

6. Réservoir à liquide selon l'une des revendications 4 ou 5, **caractérisé en ce**
- **qu'**au moins un élément chauffant (16, 18, 20, 22) fait partie intégrante de la paroi (24) délimitant le renfoncement (12),
- l'élément chauffant (16, 18, 20, 22) comprenant un polymère (11) qui a un coefficient de température positif, et
- des électrodes (19, 21, 26, 28) étant connectées au polymère (11), lesquelles électrodes sont conçues pour transmettre un courant électrique pour chauffer le polymère (11)
- en particulier en ce que l'élément chauffant (16, 18, 20, 22) est complètement entouré par une matière plastique (13) de la paroi (24).

7. Réservoir à liquide selon l'une des revendications précédentes, **caractérisé en ce que**
- la pompe (10) est reliée à une conduite de dosage (32),
- la conduite de dosage (32) s'étendant dans la région du renfoncement (12) au moins partiellement entre la pompe (10) et la cuve de compensation (8).

8. Réservoir à liquide selon l'une des revendications précédentes, **caractérisé en ce**
- **qu'**une pompe à jet (34) est prévue pour acheminer le liquide (6) du volume de stockage (4) dans la cuve de compensation (8),
- la pompe (10) étant couplée à la pompe à jet (34) pour générer un jet de propulsion.

9. Réservoir à liquide selon l'une des revendications précédentes, **caractérisé en ce**
- **qu'**au moins une soupape (38) est disposée à une sortie de pompe (36) de la pompe (10), laquelle soupape est conçue pour empêcher l'entrée de liquide lorsque la pompe (10) est à l'arrêt.

10. Réservoir à liquide selon l'une des revendications précédentes, **caractérisé en ce**
- **qu'**une entrée de pompe (42) de la pompe (10) présente une canalisation (44) qui, partant d'une section d'aspiration (46), s'étend au moins partiellement au-dessus d'un niveau de remplissage maximum (50) du volume de stockage (4), et/ou
- une entrée de pompe (42) de la pompe possède un filtre (52) disposé dans une section de tuyau descendante de l'entrée de pompe (42).
